# EUROPEAN PATENT APPLICATION

(11) **EP 4 625 189 A1**
(43) Date of publication of application: **01.10.2025**
(21) Application number: 25161895.5
(22) Date of filing: 05.03.2025
(51) Int. Cl.: G06F 13/10, G01D 18/00, G06F 13/42

(54) **SERIALIZER-DESERIALIZER SENSOR SYSTEM CONFIGURATIONS**

(30) Priority: 15.03.2024 US 202463565959 P; 09.07.2024 US 202418767476
(71) Applicant: Analog Devices, Inc., Wilmington, MA 01887 (US)
(72) Inventor: WANG, Kainan, Wilmington, 01887 (US); FERNANDO, Paul R., Wilmington, 01887 (US); CHIMENTO, Nicholas, Wilmington, 01887 (US)
(74) Representative: Horler, Philip John

(57) **Abstract**

Aspects of the present disclosure include a serializer, a method, and/or a non-transitory computer readable medium for receiving an indication indicating the sensor circuit is connected to a controller circuit, identifying a sensor identifier associated with the sensor circuit from an internal memory of the serializer, transmitting the sensor identifier from the serializer to the controller circuit to a deserializer to identify and load a sensor circuit driver associated with the sensor identifier, transmitting sensor calibration data from the memory circuit on the sensor circuit to the controller circuit, and transmitting sensor data to the deserializer.

## Description

### CROSS REFERENCE TO RELATED APPLICATIONS

The current application claims priority to, and the benefit of, United States Non-provisional Application No. 18/767,476 filed July 9, 2024 and entitled, "SERIALIZER-DESERIALIZER SENSOR SYSTEM CONFIGURATIONS," and United States Provisional Application No. 63/565,959 filed March 15, 2024 and entitled "SERDES SENSOR SYSTEMS DESIGN AND CONFIGURATION," the contents of each of which are hereby incorporated by reference in their entireties.

### BACKGROUND

Serializers and deserializers are used in many applications to transfer data among multiple devices. A serializer (or a deserializer) may reorder data from one or more sources into a single stream of transformed data. A deserializer may sort information in a single stream of data into multiple portions for separate transmission, computation, or storage. However, many devices that implement serializer/deserializer (SerDes) may not be designed for modular applications. As such, these devices will require loading dedicated drivers to, during the initiation process, properly operate the SerDes. As such, the installation and/or operation of the SerDes may be complicated. Thus, improvements in SerDes circuits are desired.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

Aspects of the present disclosure include a method for receiving an indication indicating the sensor circuit is connected to a controller circuit, identifying a sensor identifier associated with the sensor circuit from an internal memory of the serializer, transmitting the sensor identifier from the serializer to the controller circuit through the deserializer to identify and load a sensor circuit driver associated with the sensor identifier, transmitting sensor calibration data from the memory circuit on the sensor circuit to the controller circuit, and transmitting sensor data to the deserializer.

Aspects of the present disclosure include a serializer for receiving an indication indicating the sensor circuit is connected to a controller circuit, identifying a sensor identifier associated with the sensor circuit from an internal memory of the serializer, transmitting the sensor identifier from the serializer to the controller circuit through the deserializer to identify and load a sensor circuit driver associated with the sensor identifier, transmitting sensor calibration data from the memory circuit on the sensor circuit to the controller circuit, and transmitting sensor data to the deserializer.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIGS. 1A-B illustrate an example of a first SerDes architecture according to aspects of the present disclosure.
FIGS. 2A-B illustrate an example of a second SerDes architecture according to aspects of the present disclosure.
FIGS. 3A-B illustrate an example of a third SerDes architecture according to aspects of the present disclosure.
FIGS. 4A-B illustrate an example of a fourth SerDes architecture according to aspects of the present disclosure.
FIG. 5 illustrates an example of a method for handling error in a SerDes architectures according to aspects of the present disclosure.
FIG. 6 illustrates an example of encryption schemes according to aspects of the present disclosure.
FIG. 7 illustrates an example of a first method for operating a serializer according to aspects of the present disclosure.
FIG. 8 illustrates an example of a second method for operating a serializer according to aspects of the present disclosure.
FIG. 9 illustrates an example of a third method for operating a serializer according to aspects of the present disclosure.
FIG. 10 illustrates an example of a fourth method for operating a serializer according to aspects of the present disclosure.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Serializer/Deserializer (SerDes) technologies, such as Gigabit Multimedia Serial Link (GMSL), Flat Panel Display Link (FPD-Link), Gigabit Video InterFace (GVIF), Automotive Pixel Link (APIX), Automotive SerDes Alliance (ASA) Motion Link, Mobile Industry Processor Interface (MIPI) A-Phy, etc., are popular interconnect interfaces for Advanced Driver Assistance Systems (ADAS) and In-Vehicle Infotainment (IVI) systems in automotive industry. A SerDes link may provide reliable high-speed and low-latency data transmission over a distance.

Modern SerDes devices for sensor applications may have a mobile industry processor interface (MIPI) camera serial interface (CSI) interface on the input to the serializer and output from the deserializer to support various types of sensor front-end (e.g., image sensors, lidar sensors, radar sensors, etc.). A serializer may serialize high-speed sensor output data on the front-end, then sends data through a link to the deserializer. The deserializer receives data from the link and/or outputs the data to a processor or system on chip (SoC).

As SerDes technologies become more mature and available, they are now being integrated in adjacent markets such as a machine perception solutions. With more systems becoming 'software defined,' making hardware modular, and/or plug-and-play ready, will make products, solutions, and supply chains more robust and/or reduce development time. Therefore, improvements in SerDes technologies are desirable.

In some aspects, SerDes sensor systems using MIPI CSI interface, from the firmware development point of view, may be similar to MIPI sensors. Since SerDes sensor systems using MIPI CSI usually need a dedicated driver to initialize, control, and receive data from the sensor front-end, they may be unsuitable for modular applications. Therefore, these systems may lack the capability of being plug-and-play ready.

To enable modular systems, shorten development time, and make the supply chain more resilient while being cost-sensitive, a SerDes sensor solution with minimum to no hardware and firmware block/component changes on the processor side may be desirable. Solving this problem may require a set of definitions in both hardware and software.

In certain aspects, a SerDes sensor module may include power management circuits to provide regulated power supply to the module, an image sensor to sense and digitize image data, an EEPROM to store module calibration data, and a serializer to receive and pass through control signals, and transmit image data to the engine control unit (ECU).

In some aspects of the present disclosure, a controller circuit may be configured to operate and/or communicate with multiple sensor circuits.

In one aspect of the present disclosure, the SerDes architecture may store a sensor driver database on the deserializer side and use a look up table to find which driver to load. The unique chip ID stored in the serializer one time programmable memory may help the controller search for the appropriate driver. New drivers may be added through software updates.

In an aspect of the present disclosure, a SerDes device may include a microcontroller to perform certain tasks, which can help realize self-boot functions. In this architecture, the sensor start-up writes and serializer configuration may be stored on the sensor module side for self-boot to improve startup and recovery time (e.g., when the link is dropped and reestablished). The sensor mode and control information will still stay in the driver database in this architecture. Storage and/or memory may be integrated into the SerDes devices on both the serializer side and/or the deserializer side.

In one aspect of the present disclosure, the sensor module may store the data required by a conventional sensor module driver, including start-up writes for the sensor and the serializer, sensor mode information, and control registers. This architecture may use a generic sensor driver that has deserializer configurations without having to update the driver database. The controller may perform a software remapping for each sensor circuit connected.

Other aspects of the present disclosure include a combination of one or more aspects indicated above.

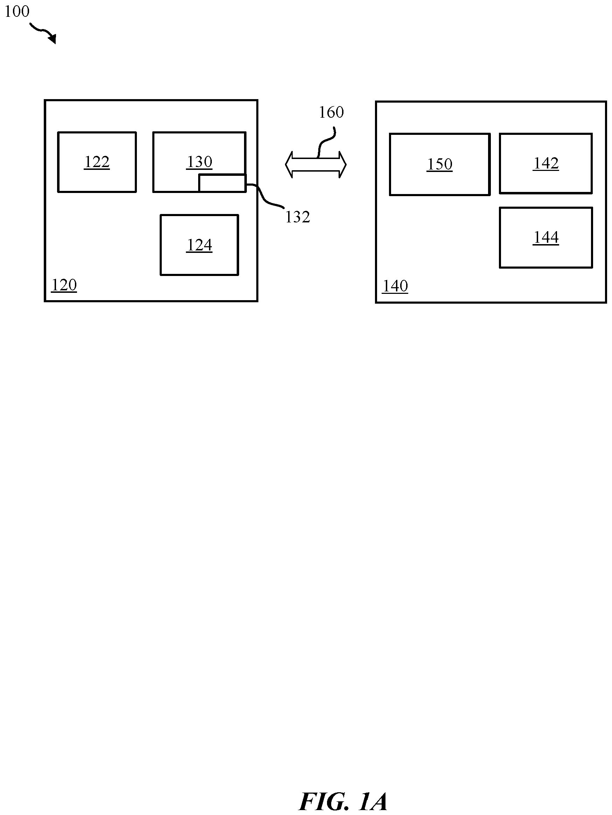

FIGS. 1A-B illustrate an example of a first SerDes architecture 100 according to aspects of the present disclosure. In some aspects, the first architecture 100 may include a sensor circuit 120 and a controller circuit 140. While a single sensor circuit is shown in this example, aspects of the present disclosure include the controller circuit 140 operating multiple sensor circuits. The sensor circuit 120 may include a sensor 122 configured to detect one or more characteristics (e.g., electrical, thermal, environmental, image, audio). The sensor circuit 120 may include one or more memories 124 configured to store information (e.g., instructions or data). Examples of data may include sensor profile, calibration data, module data, and/or other data. The sensor circuit 120 may include a serializer 130 configured to transfer control information, and/or transmit sensor data. In one aspect of the present disclosure, the serializer 130 may include a one-time programmable (OTP) memory 132 configured to store a sensor identifier (ID) and/or fixed register addresses.

In one aspect of the present disclosure, the controller circuit 140 may include one or more processors 142 configured to execute instructions stored in one or more memories 144. The controller circuit 140 may include the one or more memories 144 configured to store information (e.g., instructions or data). In some aspects, the one or more memories 144 may store a database having various sensor drivers for the controller circuit 140 to operate the sensor circuit 120. Each sensor ID may be associated with a particular sensor driver. The controller circuit 140 may include a deserializer 150 configured to transfer control information, and/or receive sensor data.

In some aspects of the present disclosure, the serializer 130 and the deserializer 150 may be connected via a link 160. The link 160 may be one or more cables configured to carry information between the serializer 130 and the deserializer 150. In some cases, the link 160 may be a wireless link.

During operation, the controller circuit 140 may provide electrical energy to the sensor circuit 120. As such, at 170, the sensor circuit 120 and/or the controller circuit 140 may initiate the system power-up procedure.

Next, at 172, the deserializer 150 may iterate through the link 160 to locate the sensor ID of the sensor circuit 120 from the OTP memory 132. The serializer 130 may transmit the sensor ID to the deserializer 150 of the controller circuit 140. The deserializer 150 may receive the sensor ID. The controller 140 and/or the processor 142 of the controller 140 may search for the appropriate driver, stored in the one or more memories 144, based on the sensor ID of the sensor circuit 120. For example, the controller 140 and/or the processor 142 of the controller 140 may use a look up table, a hash function, and/or a search algorithm to search for the appropriate driver based on the sensor ID.

Next, at 174, after the controller 140 and/or the processor 142 of the controller 140 identifies the appropriate driver, the controller 140 and/or the processor 142 of the controller 140 may load the appropriate driver from the one or more memories 144 (e.g., into one or more registers (not shown) of the processor 142).

Next, the serializer 130 may transmit one or more of the sensor profile, the calibration data, and/or the module data associated with the sensor to the controller 140. The deserializer 150 may receive the information (i.e., the one or more of the sensor profile, the calibration data, and/or the module data associated with the sensor). At 176, the controller circuit 140 may begin the sensor circuit initialization based on the information received. For example, the controller circuit 140 may initialize the sensor 122 and/or the serializer 130. The controller circuit 140 may perform calibration data readback to calibrate the sensor 122. The controller circuit 140 may perform other initialization procedures according to aspects of the present disclosure.

Next, at 178, the controller circuit 140 may begin operating the sensor circuit 120 (e.g., streaming images captured by the sensor circuit 120, receiving data measured by the sensor circuit 120, etc.).

In some aspects, the sensor ID may be a unique chip ID associated with the sensor circuit 120 and/or the sensor 122.

In one aspect, the sensor ID may be stored outside the OTP memory 132 and/or outside the serializer 130. For example, the sensor ID may be stored in a memory (not shown) outside of the sensor circuit 120.

In some aspects, the controller circuit 140 may update the drivers in the database locally (e.g., directly connect to a device configured to provide the updated drivers) and/or via the cloud (e.g., connect to a remote device configured to provide the updated drivers).

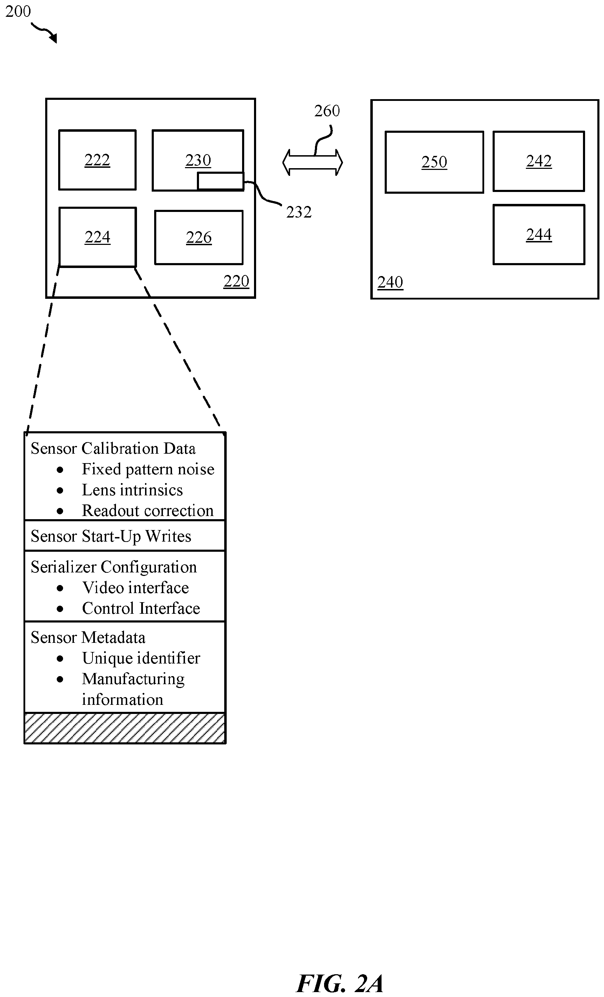

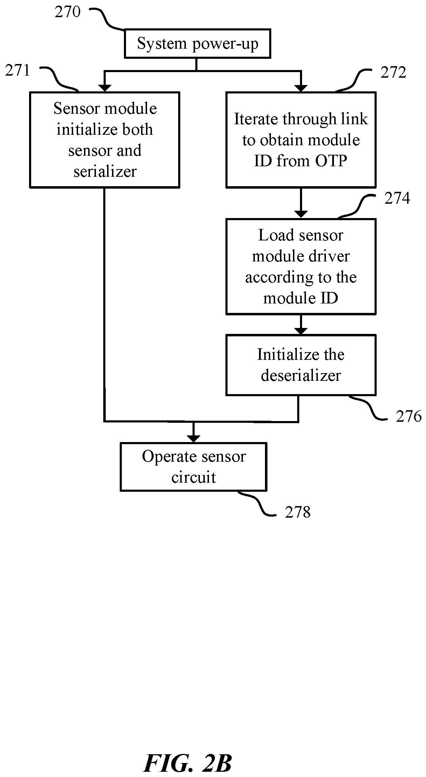

FIGS. 2A-B illustrate a second SerDes architecture 200 according to aspects of the present disclosure. In one aspect of the present disclosure, the second SerDes architecture 200 may include a sensor circuit 220 and a controller circuit 240. While a single sensor circuit is shown in this example, aspects of the present disclosure include the controller circuit 240 operating multiple sensor circuits. The sensor circuit 220 may include a sensor 222 configured to detect one or more characteristics (e.g., electrical, thermal, environmental, image, audio). The sensor circuit 220 may include one or more memories 224 configured to store information (e.g., instructions or data). Examples of data may include sensor profile, calibration data (e.g., fixed pattern noise, lens intrinsic information, readout correction, etc.), module data, startup sequence instructions, serializer configuration (e.g., video interface, control interface, etc.), metadata (e.g., sensor ID, manufacturing information, etc.), and/or other data. In some aspects, the memories 224 may be part of the serializer 230 or independent of the serializer 230. The sensor circuit 220 may include a serializer 230 configured to transfer control information and/or transmit sensor data. In one aspect of the present disclosure, the serializer 230 may include an one-time programmable OTP memory 232 configured to store the sensor ID and/or fixed register addresses. The sensor circuit 220 and/or the serializer 230 may include a microcontroller 226 configured to perform a startup sequence (also referred to as a boot sequence). The sensor ID may be stored in the OTP memory 232 and/or the one or more memories 224. In some aspects, the microcontroller 226 may be part of the serializer 230 or independent of the serializer 230. The microcontroller 226 may be a sequencer.

In one aspect of the present disclosure, the controller circuit 240 may include a processor 242 configured to execute instructions stored in one or more memories 244. The controller circuit 240 may include the one or more memories 244 configured to store information (e.g., instructions or data). In some aspects, the one or more memories 244 may store a database having various sensor drivers for the controller circuit 240 to operate the sensor circuit 220. Each sensor ID may be associated with a particular sensor driver. The controller circuit 240 may include a deserializer 250 configured to transfer control information, and/or receive sensor data.

In some aspects of the present disclosure, the serializer 230 and the deserializer 250 may be connected via a link 260. The link 260 may be one or more cables configured to carry information between the serializer 230 and the deserializer 250. In some cases, the link 260 may be a wireless link.

During operation, the controller circuit 240 may provide electrical energy to the sensor circuit 220. As such, at 270, the sensor circuit 220 and/or the controller circuit 240 may initiate the system power-up procedure.

At 271, the sensor circuit 220 may initialize the sensor circuit 220 independently (self-boot) by initializing the sensor 222 and/or the serializer 230. Specifically, the microcontroller 226 of the sensor circuit 220 may initialize the sensor circuit 220 using one or more information stored in the one or more memories 224. By initializing the sensor circuit 220 using self-boot (without requiring control information from the controller 240), the sensor circuit 220 may be available for use sooner than if the controller 240 initializes the sensor circuit 220. Given that the microcontroller 226 may initialize the sensor circuit 220 without relying on the controller 240, the initialization process may occur contemporaneously with steps 272 and/ 274.

At 272, the deserializer 250 may iterate through the link 260 to obtain the sensor ID of the sensor circuit 220 from the OTP memory 232. The serializer 230 may transmit the sensor ID to the deserializer 250 of the controller circuit 240. The deserializer 250 may receive the sensor ID. The controller 240 and/or the processor 242 of the controller 240 may search for the appropriate driver, stored in the one or more memories 244, based on the sensor ID of the sensor circuit 220. For example, the controller 240 and/or the processor 242 of the controller 240 may use a look up table, a hash function, and/or a search algorithm to search for the appropriate driver based on the sensor ID.

At 274, after the controller 240 and/or the processor 242 of the controller 240 identifies the appropriate driver, the controller 240 and/or the processor 242 of the controller 240 may load the appropriate driver from the one or more memories 244 (e.g., into one or more registers (not shown) of the processor 242).

At 276, the controller circuit 240 may initialize the deserializer 250.

At 278, after the initialization of the deserializer 250 and the sensor circuit 220, the controller circuit 240 may begin operating the sensor circuit 220 (e.g., streaming images captured by the sensor circuit 220, receiving data measured by the sensor circuit 220, etc.).

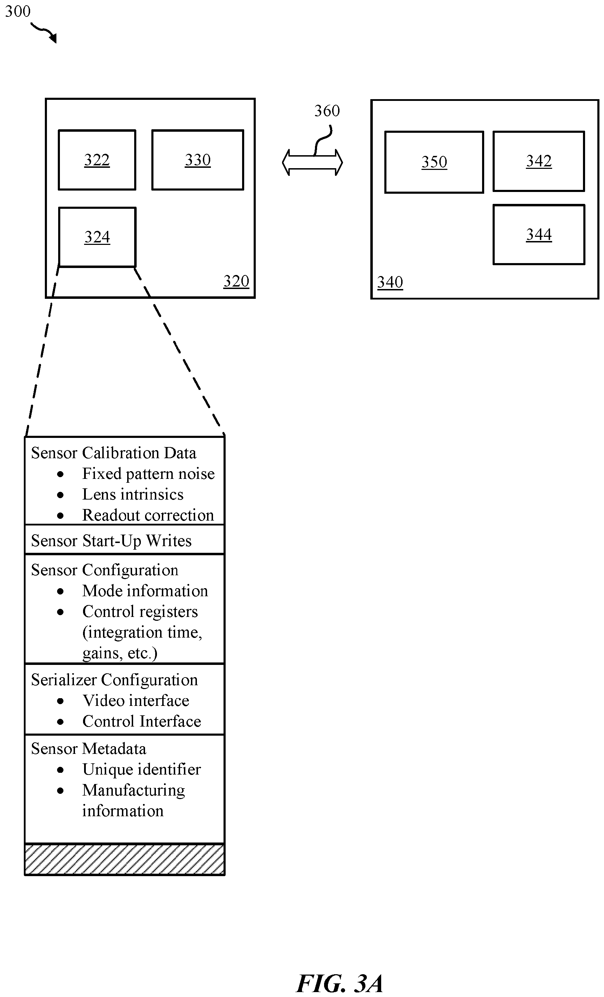

FIGS. 3A-B illustrate an example of a third SerDes architecture 300 according to aspects of the present disclosure. In some aspects, the third architecture 300 may include a sensor circuit 320 and a controller circuit 340. While a single sensor circuit is shown in this example, aspects of the present disclosure include the controller circuit 340 operating multiple sensor circuits. The sensor circuit 320 may include a sensor 322 configured to detect one or more characteristics (e.g., electrical, thermal, environmental, image, audio). The sensor circuit 320 may include one or more memories 324 configured to store information (e.g., instructions or data). Examples of data may include sensor profile, calibration data (e.g., fixed pattern noise, lens intrinsic information, readout correction, etc.), module data, startup sequence instructions, sensor configuration (e.g., mode information, control registers, integration times, gains, etc.), serializer configuration (e.g., video interface, control interface, etc.), metadata (e.g., sensor ID, manufacturing information, etc.), and/or other data. The sensor circuit 320 may include a serializer 330 configured to receive electrical energy and/or control information, and/or transmit sensor data.

In one aspect of the present disclosure, the controller circuit 340 may include a processor 342 configured to execute instructions stored in one or more memories 344. The controller circuit 340 may include the one or more memories 344 configured to store information (e.g., instructions or data). In some aspects, the one or more memories 344 may store a driver with a control interface and a video interface to communicate with the deserializer 350. The controller circuit 340 may include a deserializer 350 configured to transfer control information, and/or receive sensor data.

In some aspects of the present disclosure, the serializer 330 and the deserializer 350 may be connected via a link 360. The link 360 may be one or more cables configured to carry information between the serializer 330 and the deserializer 350. In some cases, the link 360 may be a wireless link.

During operation, the controller circuit 340 may provide electrical energy to the sensor circuit 320. As such, at 370, the sensor circuit 320 and/or the controller circuit 340 may initiate the system power-up procedure.

Next, at 372, the deserializer 350 may iterate through the link 360 to load information from the one or more memories 324 of the sensor circuit 320. For example, the serializer 330 may transmit one or more of sensor calibration data, sensor startup procedures, sensor configurations, serializer configurations, metadata, and/or other information.

Next, at 374, the controller circuit 340 may begin the sensor module initialization based on the information received. For example, the controller circuit 340 may initialize the sensor 322 and/or the serializer 330. The controller circuit 340 may perform calibration data readback to calibrate the sensor 322. The controller circuit 340 may map the control registers to variables in the firmware. The controller circuit 340 may load mode information. The controller circuit 340 may perform other initialization procedures according to aspects of the present disclosure.

**In** one aspect of the present disclosure, prior to the start of the operation, the controller circuit 340 may perform a software remapping of the sensor circuit 320. As such, the controller circuit 340 would be able to interface with and/or control the sensor circuit 320 using the loaded driver.

Next, at 376, the controller circuit 340 may begin operating the sensor circuit 320 (e.g., streaming images captured by the sensor circuit 320, receiving data measured by the sensor circuit 320, etc.).

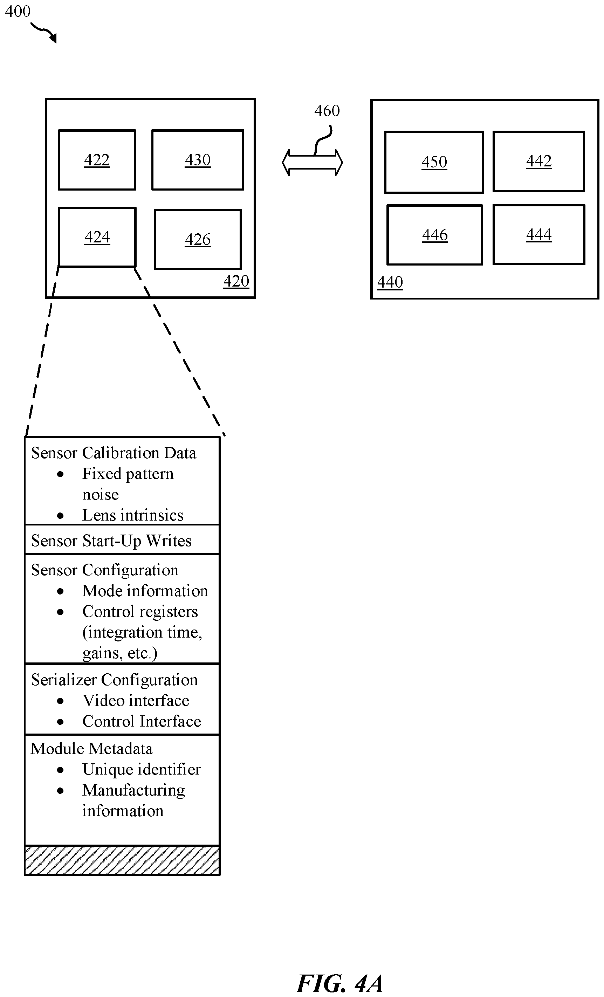

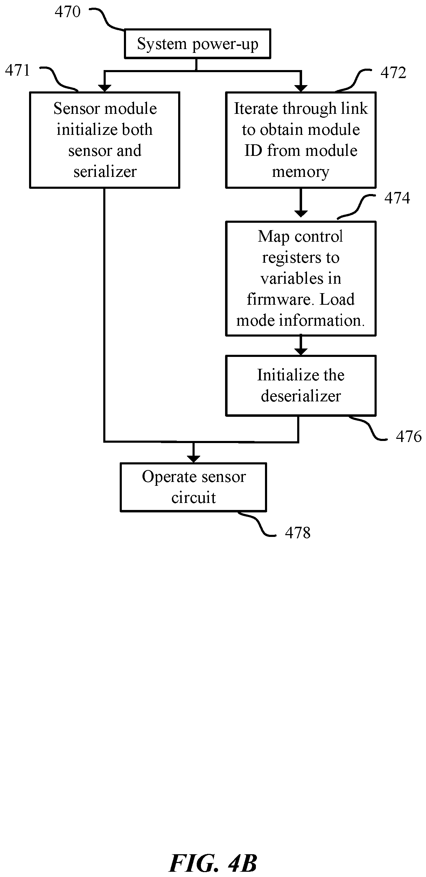

FIGS. 4A-B illustrate a fourth SerDes architecture 400 according to aspects of the present disclosure. In one aspect of the present disclosure, the fourth SerDes architecture 400 may include a sensor circuit 420 and a controller circuit 440. While a single sensor circuit is shown in this example, aspects of the present disclosure include the controller circuit 440 operating multiple sensor circuits. The sensor circuit 420 may include a sensor 422 configured to detect one or more characteristics (e.g., electrical, thermal, environmental, image, audio). The sensor circuit 420 may include one or more memories 424 configured to store information (e.g., instructions or data). Examples of data may include sensor profile, calibration data (e.g., fixed pattern noise, lens intrinsic information, readout correction, etc.), module data, sensor configuration (mode information, control registers, integration time, gains, etc.), startup sequence instructions, serializer configuration (e.g., video interface, control interface, etc.), metadata (e.g., sensor ID, manufacturing information, etc.), and/or other data. In some aspects, the memories 424 may be part of the serializer 430 or independent of the serializer 430. The sensor circuit 420 may include a serializer 430 configured to receive electrical energy and/or transmit sensor data. The sensor circuit 420 and/or the serializer 430 may include a microcontroller 426 configured to perform a startup sequence. In some aspects, the microcontroller 426 may be part of the serializer 430 or independent of the serializer 430. The microcontroller 426 may be a sequencer.

In one aspect of the present disclosure, the controller circuit 440 may include a processor 442 configured to execute instructions stored in one or more memories 444. The controller circuit 440 may include the one or more memories 444 configured to store information (e.g., instructions or data). In some aspects, the one or more memories 444 may store information with a control interface and a video interface to communicate with the deserializer 450. The controller circuit 440 may include a deserializer 450 configured to transfer control information, and/or receive sensor data. The controller circuit 440 may include a microcontroller 446 configured to perform a deserializer initiation.

In some aspects of the present disclosure, the serializer 430 and the deserializer 450 may be connected via a link 460. The link 460 may be one or more cables configured to carry information between the serializer 430 and the deserializer 450. In some cases, the link 460 may be a wireless link.

During operation, the controller circuit 440 may provide electrical energy to the sensor circuit 420. As such, at 470, the sensor circuit 420 and/or the controller circuit 440 may initiate the system power-up procedure.

At 471, the sensor circuit 420 may initialize the sensor circuit 420 independently by initializing the sensor 422 and/or the serializer 430. Specifically, the microcontroller 426 of the sensor circuit 420 may initialize the sensor circuit 420 using one or more information stored in the one or more memories 424. By initializing the sensor circuit 420 using self-boot (without requiring the controller 440), the sensor circuit 420 may be available for use sooner than if the controller 440 initializes the sensor circuit 420.

Next, at 472, the deserializer 450 may iterate through the link 460 to load information from the one or more memories 424 of the sensor circuit 420. For example, the serializer 430 may transmit one or more of sensor calibration data, sensor startup procedures, sensor configurations, serializer configurations, metadata, and/or other information.

Next, at 474, the controller circuit 440 may map the control registers to variables in the firmware. The controller circuit 440 may load mode information. The controller circuit 440 may perform other initialization procedures according to aspects of the present disclosure. In one aspect of the present disclosure, the controller circuit 440 may perform a software remapping of the sensor circuit 420. As such, the controller circuit 440 would be able to interface with and/or control the sensor circuit 420 using the loaded driver.

Next, at 476, the controller circuit 440 may initialize the deserializer 450. In one aspect of the present disclosure, the initialization may be performed by the microcontroller 446 of the controller circuit 440. As such, the processor 442 of the controller 440 may conduct other tasks (e.g., controlling/communicating with other sensor circuits).

Next, at 478, the controller circuit 440 may begin operating the sensor circuit 420 (e.g., streaming images captured by the sensor circuit 420, receiving data measured by the sensor circuit 420, etc.).

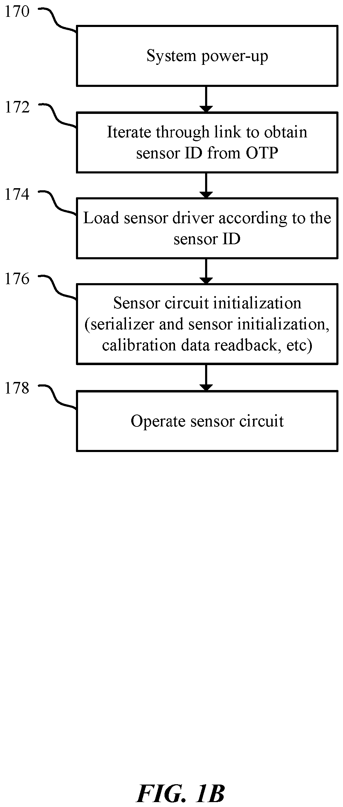

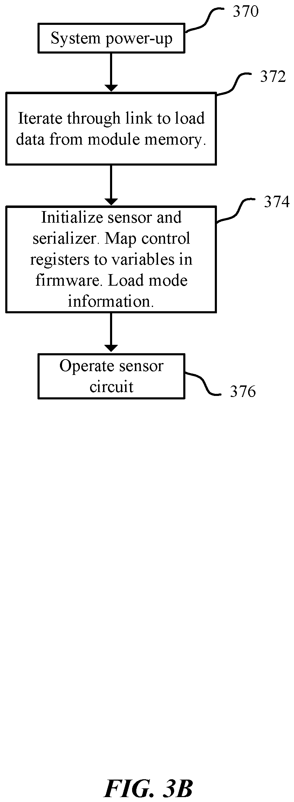

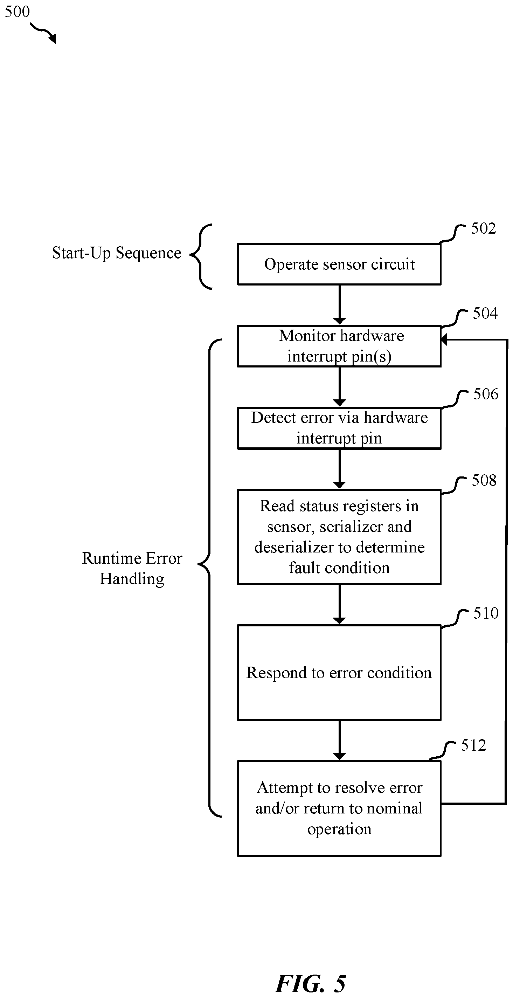

FIG. 5 illustrates an example of a method 500 for handling errors according to aspects of the present disclosure. After initialization, aspects of the present disclosure may include monitoring the system for errors which have occurred in the sensor, serializer, or deserializer. The driver software is responsible to determine error type and attempt to resolve the error. In the first SerDes architecture 100 (FIG. 1) and the third SerDes architecture (FIG. 3), system-level error handling may be done centrally in the processor 142, 342. The sensor driver may include a generalized mechanism to handle notifications from the SerDes and sensors. The SerDes devices with built-in microcontrollers may be able to sense and resolve some errors within the devices. This may lead to faster recovery time and improved system robustness. A generalized error-handling feature may require additional memory fields in sensor circuits.

Referring to FIGs. 1-5, the method 500 may begin after the beginning of the operation of the sensor circuit at 502. At 504, the processor 142, 242, 342, 442 and/or the microcontrollers 226, 426, 446 may monitor one or more hardware interrupt pins for errors.

At 506, the processor 142, 242, 342, 442 and/or the microcontrollers 226, 426, 446 may detect one or more errors via the one or more hardware interrupt pins.

At 508, the processor 142, 242, 342, 442 and/or the microcontrollers 226, 426, 446 may read the one or more status registers in the sensor, the serializer, and/or the deserializer to determine the presence (and/or absence) of one or more fault conditions based on the errors.

At 510, the processor 142, 242, 342, 442 and/or the microcontrollers 226, 426, 446 may respond to the one or more errors. For example, the processor 142, 242, 342, 442 and/or the microcontrollers 226, 426, 446 may enter into a safe state upon the detection of the errors.

At 512, the processor 142, 242, 342, 442 and/or the microcontrollers 226, 426, 446 may resolve or attempt to resolve the one or more errors and/or return to nominal operation.

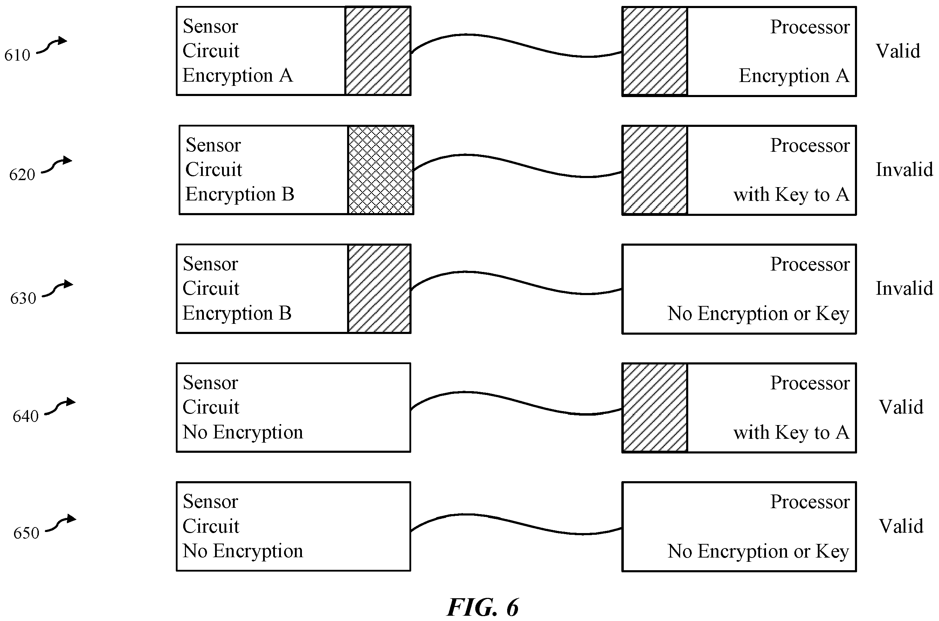

FIG. 6 illustrates examples of encryption compatibilities according to aspects of the present disclosure. To prevent hardware/software IP pollution, the sensor modules can be encrypted. The processor and/or microcontroller receiving encrypted data from the sensor circuits may require the correct key to decrypt the encrypted data. If there is an open sensor circuit ecosystem, a sensor circuit without encryption should be accepted by host devices with or without a key. The encryption information may be stored in the memory inside the sensor circuit.

In some aspects, a first scheme 610 illustrates both the sensor circuit and the processor utilizing the same encryption scheme (i.e., Encryption A). Therefore, the first scheme 610 is a valid configuration (i.e., the sensor circuit and the processor are able to communicate properly).

In some aspects, a second scheme 620 illustrates the sensor circuit and the processor having different encryption schemes. As such, the second scheme 620 is an invalid configuration (i.e., the sensor circuit and the processor are unable to communicate properly due to the inability to decrypt).

In an aspect, a third scheme 630 illustrates the sensor circuit utilizing Encryption B and the processor does not utilize encryption and has no decryption key. As such, the third scheme 630 is an invalid configuration.

In certain aspects, a fourth scheme 640 illustrates the sensor circuit no utilizing any encryption and the processor possesses a decryption key for Encryption A. As such, the fourth scheme 640 is a valid configuration.

In other aspects, a fifth scheme 650 illustrates both the sensor circuit and the processor not utilizing encryption. As such, the fifth scheme 650 is a valid configuration.

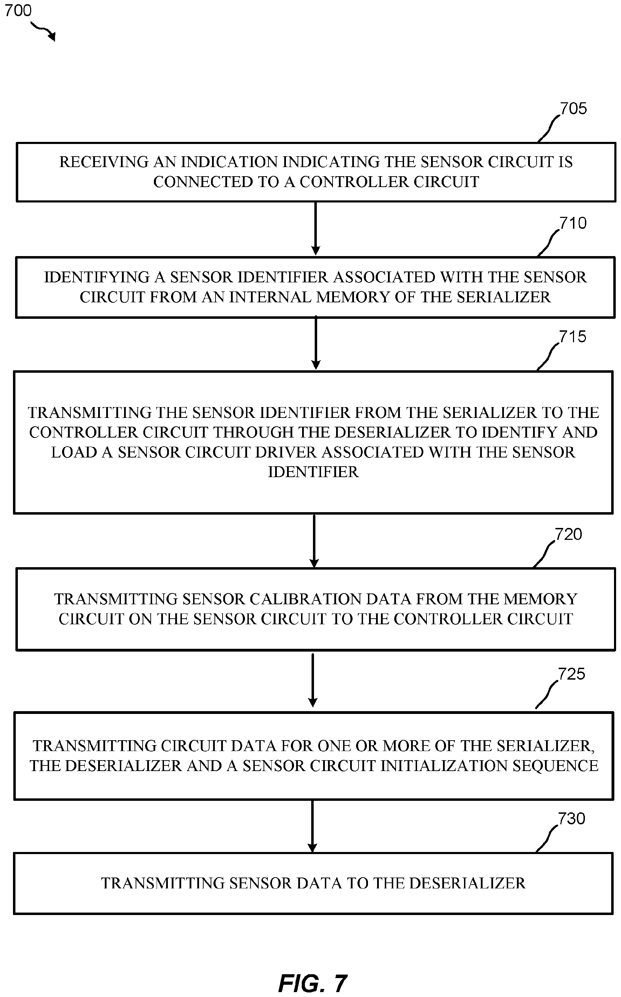

FIG. 7 illustrates an example of a method 700 for operating a serializer according to aspects of the present disclosure. The method 700 may be performed by the serializer 130 and/or the sensor circuit 120.

At 705, the method 700 may receive an indication indicating the sensor circuit is connected to a controller circuit. The serializer 130 and/or the sensor circuit 120 may be configured to, and/or provide means for, receiving an indication indicating the sensor circuit is connected to a controller circuit.

At 710, the method 700 may identify a sensor identifier associated with the sensor circuit from an internal memory of the serializer. The serializer 130 and/or the sensor circuit 120 may be configured to, and/or provide means for, identifying a sensor identifier associated with the sensor circuit from an internal memory of the serializer.

At 715, the method 700 may transmit the sensor identifier from the serializer to the controller circuit through the deserializer to identify and load a sensor circuit driver associated with the sensor identifier. The serializer 130 and/or the sensor circuit 120 may be configured to, and/or provide means for, transmitting the sensor identifier from the serializer to the controller circuit through the deserializer to identify and load a sensor circuit driver associated with the sensor identifier.

At 720, the method 700 may transmit sensor calibration data from the memory circuit on the sensor circuit to the controller circuit. The serializer 130 and/or the sensor circuit 120 may be configured to, and/or provide means for, transmitting sensor calibration data from the memory circuit on the sensor circuit to the controller circuit.

At 725, the method 700 may transmit circuit data for one or more of the serializer, the deserializer and a sensor circuit initialization sequence. The serializer 130 and/or the sensor circuit 120 may be configured to, and/or provide means for, transmitting circuit data for one or more of the serializer, the deserializer and a sensor circuit initialization sequence.

At 730, the method 700 may transmit sensor data to the deserializer. The serializer 130 and/or the sensor circuit 120 may be configured to, and/or provide means for, transmitting sensor data to the deserializer.

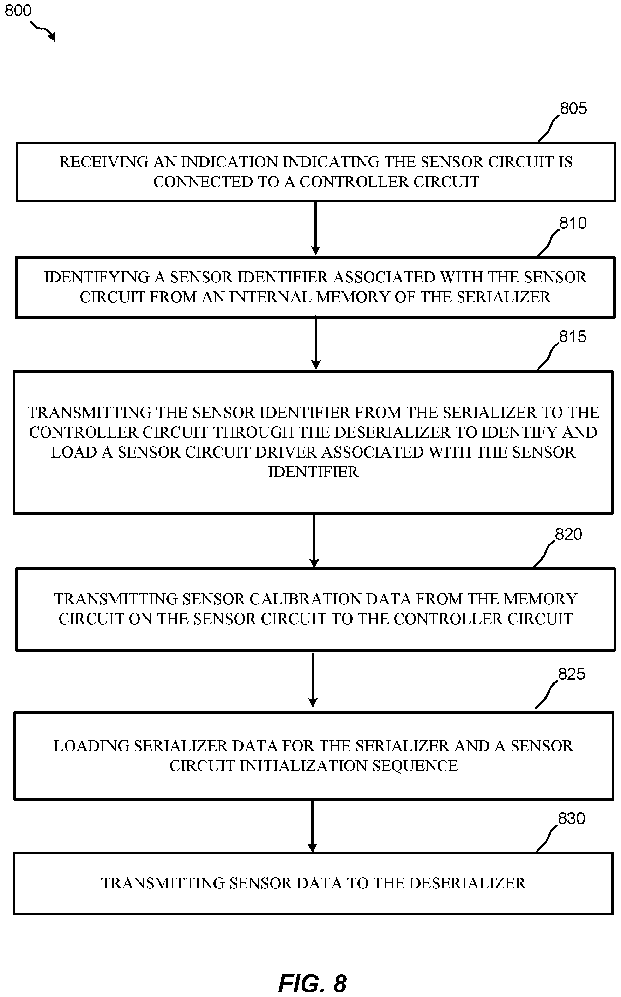

FIG. 8 illustrates an example of a method 800 for operating a serializer according to aspects of the present disclosure. The method 800 may be performed by the serializer 230, the microcontroller 226, and/or the sensor circuit 220.

At 805, the method 800 may receive an indication indicating the sensor circuit is connected to a controller. The serializer 230, the microcontroller 226, and/or the sensor circuit 220 may be configured to, and/or provide means for, receiving an indication indicating the sensor circuit is connected to a controller.

At 810, the method 800 may identify a sensor identifier associated with the sensor circuit from an internal memory of the serializer. The serializer 230, the microcontroller 226, and/or the sensor circuit 220 may be configured to, and/or provide means for, identifying a sensor identifier associated with the sensor circuit from an internal memory of the serializer.

At 815, the method 800 may transmit the sensor identifier from the serializer to the controller circuit through the deserializer to identify and load a sensor circuit driver associated with the sensor identifier. The serializer 230, the microcontroller 226, and/or the sensor circuit 220 may be configured to, and/or provide means for, transmitting the sensor identifier from the serializer to the controller circuit through the deserializer to identify and load a sensor circuit driver associated with the sensor identifier.

At 820, the method 800 may transmit sensor calibration data from the memory circuit on the sensor circuit to the controller circuit. The serializer 230, the microcontroller 226, and/or the sensor circuit 220 may be configured to, and/or provide means for, transmitting sensor calibration data from the memory circuit on the sensor circuit to the controller circuit.

At 825, the method 800 may load serializer data for the serializer and a sensor circuit initialization sequence. The serializer 230, the microcontroller 226, and/or the sensor circuit 220 may be configured to, and/or provide means for, loading serializer data for the serializer and a sensor circuit initialization sequence.

At 830, the method 800 may transmit sensor data to the deserializer. The serializer 230, the microcontroller 226, and/or the sensor circuit 220 may be configured to, and/or provide means for, transmitting sensor data to the deserializer.

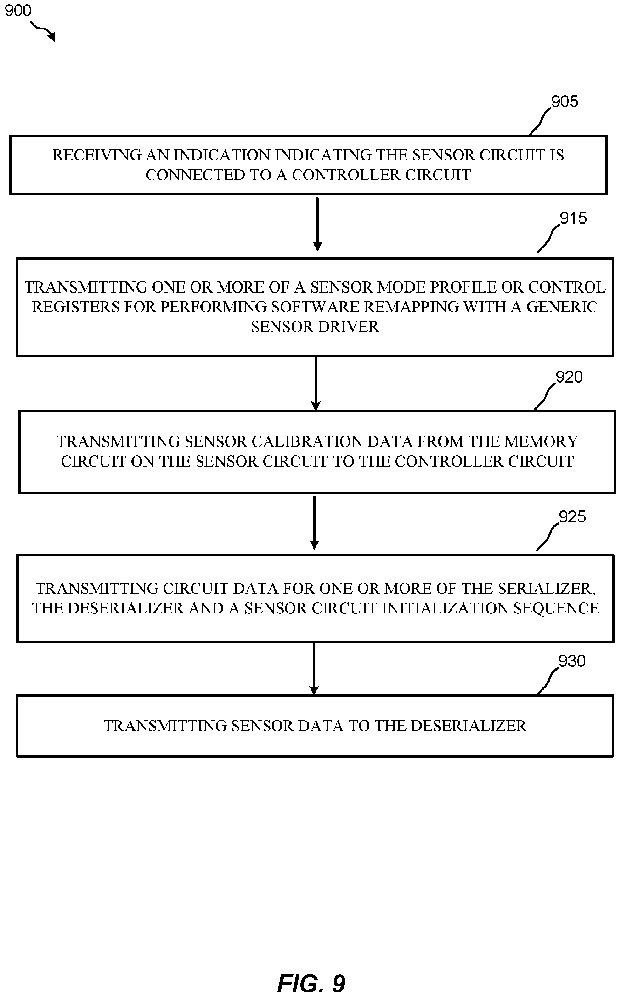

FIG. 9 illustrates an example of a method 900 for operating a serializer according to aspects of the present disclosure. The method 900 may be performed by the serializer 330 and/or the sensor circuit 320.

At 905, the method 900 may receive an indication indicating the sensor circuit is connected to a controller circuit. The serializer 330 and/or the sensor circuit 320 may be configured to, and/or provide means for, receiving an indication indicating the sensor circuit is connected to a controller circuit.

At 915, the method 900 may transmit one or more of a sensor mode profile and/or control registers for performing software remapping with a generic sensor driver. The serializer 330 and/or the sensor circuit 320 may be configured to, and/or provide means for, transmitting one or more of a sensor mode profile or control registers for performing software remapping with a generic sensor driver.

At 920, the method 900 may transmit sensor calibration data from the memory circuit on the sensor circuit to the controller circuit. The serializer 330 and/or the sensor circuit 320 may be configured to, and/or provide means for, transmitting sensor calibration data from the memory circuit on the sensor circuit to the controller circuit.

At 925, the method 900 may transmit circuit data for one or more of the serializer, the deserializer and a sensor circuit initialization sequence. The serializer 330 and/or the sensor circuit 320 may be configured to, and/or provide means for, transmitting circuit data for one or more of the serializer, the deserializer and a sensor circuit initialization sequence.

At 930, the method 900 may transmit sensor data to the deserializer. The serializer 330 and/or the sensor circuit 320 may be configured to, and/or provide means for, transmitting sensor data to the deserializer.

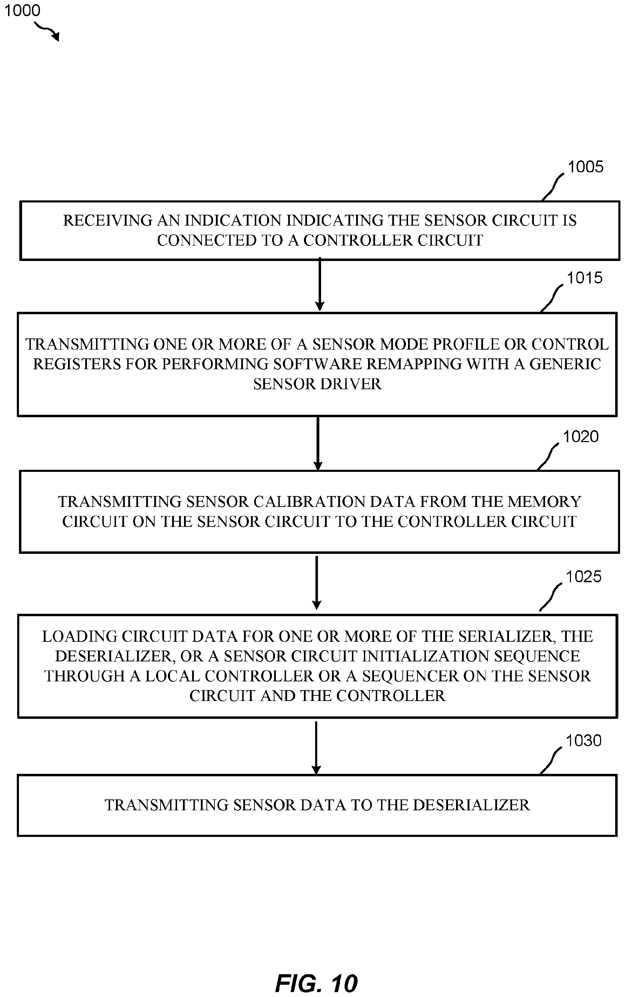

FIG. 10 illustrates an example of a method 1000 for operating a serializer according to aspects of the present disclosure. The method 1000 may be performed by the serializer 430, the microcontroller 426, and/or the sensor circuit 420.

At 1005, the method 1000 may receive an indication indicating the sensor circuit is connected to a controller. The serializer 430, the microcontroller 426, and/or the sensor circuit 420 may be configured to, and/or provide means for, receiving an indication indicating the sensor circuit is connected to a controller.

At 1015, the method 1000 may transmit one or more of a sensor mode profile or control registers for performing software remapping with a generic sensor driver. The serializer 430, the microcontroller 426, and/or the sensor circuit 420 may be configured to, and/or provide means for, transmitting one or more of a sensor mode profile or control registers to the deserializer 450 and/or the microcontroller 446 for performing software remapping with a generic sensor driver.

At 1020, the method 1000 may transmit sensor calibration data from the memory circuit on the sensor circuit to the controller circuit. The serializer 430, the microcontroller 426, and/or the sensor circuit 420 may be configured to, and/or provide means for, transmitting sensor calibration data from the memory circuit on the sensor circuit to the controller circuit.

At 1025, the method 1000 may load circuit data for one or more of the serializer, the deserializer, or a sensor circuit initialization sequence through a local controller or a sequencer on the sensor circuit and the controller. The serializer 430, the microcontroller 426, and/or the sensor circuit 420 may be configured to, and/or provide means for, loading circuit data for one or more of the serializer, the deserializer, or a sensor circuit initialization sequence through a local controller or a sequencer on the sensor circuit and the controller.

At 1030, the method 1000 may transmit sensor data to the deserializer. The serializer 430, the microcontroller 426, and/or the sensor circuit 420 may be configured to, and/or provide means for, transmitting sensor data to the deserializer.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. For example, changes may be made in the function and arrangement of elements discussed without departing from the scope of the disclosure. Also, various examples may omit, substitute, or add various procedures or components as appropriate. For instance, the methods described may be performed in an order different from that described, and various steps may be added, omitted, or combined. Also, features described with respect to some examples may be combined in other examples. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

Several aspects of telecommunication systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example embodiments, the functions described may be implemented in hardware, software, or any combination thereof. If implemented in software, the functions may be stored on or encoded as one or more instructions or code on a computer-readable medium. Computer-readable media includes computer storage media. Storage media may be any available media that may be accessed by a computer. By way of example, and not limitation, such computer-readable media may comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that may be used to store computer executable code in the form of instructions or data structures that may be accessed by a computer.

The various illustrative blocks and components described in connection with the disclosure herein may be implemented or performed with a specially-programmed device, such as but not limited to a processor, a digital signal processor (DSP), an ASIC, a FPGA or other programmable logic device, a discrete gate or transistor logic, a discrete hardware component, or any combination thereof designed to perform the functions described herein. A specially-programmed processor may be a microprocessor, but in the alternative, the processor may be any conventional processor, controller, microcontroller, or state machine. A specially-programmed processor may also be implemented as a combination of computing devices, e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a non-transitory computer-readable medium. Other examples and implementations are within the scope and spirit of the disclosure and appended claims. For example, due to the nature of software, functions described above may be implemented using software executed by a specially programmed processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C).

Computer-readable media includes both computer storage media and communication media including any medium that facilitates transfer of a computer program from one place to another. A storage medium may be any available medium that may be accessed by a general purpose or special purpose computer. By way of example, and not limitation, computer-readable media may comprise RAM, ROM, EEPROM, CD-ROM or other optical disk storage, magnetic disk storage or other magnetic storage devices, or any other medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure. Various modifications to the disclosure will be readily apparent to those skilled in the art, and the common principles defined herein may be applied to other variations without departing from the spirit or scope of the disclosure. Furthermore, although elements of the described aspects may be described or claimed in the singular, the plural is contemplated unless limitation to the singular is explicitly stated. Additionally, all or a portion of any aspect may be utilized with all or a portion of any other aspect, unless stated otherwise. Thus, the disclosure is not to be limited to the examples and designs described herein but is to be accorded the widest scope consistent with the principles and novel features disclosed herein.

## Claims

1. A method by a serializer of a sensor circuit, comprising:
receiving an indication indicating the sensor circuit is connected to a controller circuit;
identifying a sensor identifier associated with the sensor circuit from an internal memory of the serializer;
transmitting the sensor identifier from the serializer to the controller circuit to a deserializer to identify and load a sensor circuit driver associated with the sensor identifier;
transmitting sensor calibration data from the memory circuit on the sensor circuit to the controller circuit; and
transmitting sensor data to the deserializer.

2. The method of claim 1, further comprising transmitting circuit data for one or more of the serializer, the deserializer and a sensor circuit initialization sequence.

3. The method of claim 2, further comprising receiving signals, from the controller circuit, for initializing one or more of the serializer or the sensor circuit.

4. The method of any preceding claim, further comprising loading serializer data for the serializer and a sensor circuit initialization sequence.

5. The method of claim 4, further comprising initializing one or more of the serializer or the sensor circuit.

6. The method of any preceding claim, wherein the sensor identifier is stored in a serializer one-time programmable (OTP) memory.

7. The method of claim 6, wherein the sensor identifier is a unique identifier associated with the serializer or the sensor circuit.

8. A serializer of a sensor circuit, comprising:
a one time programmable (OTP) memory having a sensor identifier;
wherein the serializer is configured to:
receive an indication indicating the sensor circuit is connected to a controller circuit;
identify the sensor identifier associated with the sensor circuit from an internal memory of the serializer;
transmit the sensor identifier from the serializer to the controller circuit to a deserializer to identify and load a sensor circuit driver associated with the sensor identifier;
transmit sensor calibration data from the memory circuit on the sensor circuit to the controller circuit; and
transmit sensor data to the deserializer.

9. The serializer of claim 8, wherein the serializer is further configured to transmit circuit data for one or more of the serializer, the deserializer and a sensor circuit initialization sequence.

10. The serializer of claim 9, wherein the serializer is further configured to receive signals, from the controller circuit, for initializing one or more of the serializer or the sensor circuit.

11. The serializer of any of claims 8 to 10, wherein the serializer is further configured to load serializer data for the serializer and a sensor circuit initialization sequence.

12. The serializer of any of claims 8 to 11, further comprising a microcontroller configured to initialize one or more of the serializer or the sensor circuit.

13. The serializer of any of claims 8 to 12, wherein the sensor identifier is a unique identifier associated with the serializer.
